(19) Europäisches Patentamt
European Patent Office
Office européen des brevets

(11) **EP 2 850 402 B1**

(12) **FASCICULE DE BREVET EUROPEEN**

(45) Date de publication et mention
de la délivrance du brevet:
**28.12.2022 Bulletin 2022/52**

(21) Numéro de dépôt: **13727278.7**

(22) Date de dépôt: **13.05.2013**

(51) Classification Internationale des Brevets (IPC):
**G01J 1/10** [(2006.01)]

(52) Classification Coopérative des Brevets (CPC):
**G01J 1/10**

(86) Numéro de dépôt international:
**PCT/FR2013/051040**

(87) Numéro de publication internationale:
**WO 2013/171414 (21.11.2013 Gazette 2013/47)**

(54) **ESTIMATION DE LA DERIVE D'UN CAPTEUR DE RAYONNEMENT SOLAIRE**

SCHÄTZUNG DES DRIFTS BEI EINEM SONNENSTRAHLUNGSSENSOR

ESTIMATION OF DRIFT IN A SOLAR RADIATION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2012 FR 1254377**

(43) Date de publication de la demande:
**25.03.2015 Bulletin 2015/13**

(73) Titulaire: **Commissariat à l'Énergie Atomique et aux Énergies Alternatives**
**75015 Paris (FR)**

(72) Inventeurs:
• **LESPINATS, Sylvain**
**73100 Aix-les-Bains (FR)**
• **LE PIVERT, Xavier**
**73100 Tresserve (FR)**

(74) Mandataire: **Cabinet Beaumont**
**4, Place Robert Schuman**
**B.P. 1529**
**38025 Grenoble Cedex 1 (FR)**

(56) Documents cités:
**EP-A1- 2 211 300**

• **DREWS ET AL: "Monitoring and remote failure detection of grid-connected PV systems based on satellite observations", SOLAR ENERGY, PERGAMON PRESS. OXFORD, GB, vol. 81, no. 4, 24 mars 2007 (2007-03-24), pages 548-564, XP022000706, ISSN: 0038-092X, DOI: 10.1016/J.SOLENER.2006.06.019**

**EP 2 850 402 B1**

**Description**

Domaine de l'invention

La présente invention concerne de façon générale les capteurs d'évaluation du rayonnement solaire, tels que des pyranomètres ou des cellules de référence, et, plus particulièrement, l'estimation de la dérive et la calibration d'un capteur de ce type.

Exposé de l'art antérieur

Des capteurs d'évaluation du rayonnement solaire sont de plus en plus utilisés avec le développement des installations solaires, que ce soit pour la production de chaleur ou d'électricité. Ces capteurs servent, en particulier, à mesurer le rayonnement (watt/m$^2$) sur les lieux des installations de production d'énergie solaire. Ces mesures sont utilisées, entre autres, pour estimer la ressource solaire ou surveiller le bon fonctionnement et la production d'énergie des centrales solaires.

On connaît essentiellement deux catégories de capteurs de rayonnement : des capteurs constitués de cellules photovoltaïques de référence, et des pyranomètres qui sont des capteurs spécifiques dédiés à une mesure du rayonnement du ciel (rayonnement solaire). Un pyranomètre est un capteur de flux thermique qui mesure le rayonnement reçu.

Tous ces dispositifs de mesure de rayonnement fournissent une information (par exemple, un courant, une tension ou un mot numérique) représentative du rayonnement qu'ils reçoivent.

Un problème récurrent avec l'utilisation des capteurs de rayonnement solaire est que les mesures dérivent au cours du temps. Cette dérive impose un réétalonnage ou calibration régulier.

Aujourd'hui, pour être réétalonnés, les capteurs sont en général démontés puis renvoyés en usine ou dans des ateliers pour être soumis à un rayonnement de référence et corriger les coefficients d'un algorithme appliqué aux mesures et fournissant le rayonnement réel à partir d'une mesure brute.

La norme ISO 9847 décrit des dispositifs de calibration de capteurs solaires lors des retours en atelier ou par comparaison avec d'autres capteurs spécialement apportés sur le site par un service de maintenance. Ces dispositifs ne sont pas adaptés à un étalonnage ou à une correction de dérive, sur site, continue dans le temps et automatique.

Les documents US 7,166,825, US 7,576,346 et US 2009/0012731 décrivent des systèmes de réétalonnage de capteurs de rayonnement montés dans des véhicules spatiaux. Les systèmes décrits permettent d'étalonner le capteur en comparant la mesure faite sur l'objet concerné (un corps astral donné) à une mesure faite sur un objet de référence pour lequel le rayonnement est connu avec précision (le soleil par exemple dont le niveau de rayonnement est connu pour peu qu'on soit en dehors de l'atmosphère terrestre).

De tels systèmes ne sont pas applicables à des capteurs sur terre, car le rayonnement solaire ne peut plus être utilisé comme référence du fait de la variabilité de la transmission du rayonnement par l'atmosphère suivant les conditions météorologiques.

La complexité du réétalonnage d'un capteur de rayonnement conduit à ce que de nombreux instruments ne sont pas ré-étalonnés assez fréquemment (en pratique quelques fois par an tout au plus), ce qui nuit à la précision des mesures et à l'estimation des capacités de production des centrales solaires. De plus, la multiplication et la localisation des centrales solaires (par exemple chez des particuliers) rendent plus complexes de tels réétalonnages. Enfin, des considérations de coût peuvent faire que cette opération sera négligée dans certains cas.

Le document EP-A-2211300 décrit un procédé de prévision de la production électrique d'un dispositif photovoltaïque et propose le diagnostic d'une installation photovoltaïque en comparant une production réelle avec une production estimée. Il s'agit d'une mesure de la production électrique réelle des modules photovoltaïques.

L'article "Monitoring and remote failure détection of grid-connected PV systems based on satellite observations", de A. Drews et al., Science Direct, Solar Energy 81 (2007), p. 548-564, décrit un système de détection de défaut dans des panneaux photovoltaïques, basé sur des observations par satellites, et qui vise à éviter l'utilisation de cellules de référence ou d'un pyranomètre.

Résumé

Ainsi, un mode de réalisation de la présente invention vise à proposer une technique d'estimation de la dérive d'un capteur de rayonnement qui pallie tout ou partie des inconvénients des techniques connues.

Un autre objet d'un mode de réalisation de la présente invention est de proposer une technique de calibration adaptée à un fonctionnement sur site.

Un autre objet d'un mode de réalisation de la présente invention est de proposer une technique d'estimation de la dérive et de calibration sans intervention extérieure.

Un autre objet d'un mode réalisation de la présente invention est de permettre d'augmenter la fréquence des calibrations d'un capteur de rayonnement.

Un autre objet d'un mode de réalisation de la présente invention est de proposer une solution ne nécessitant aucune modification structurelle du capteur de rayonnement.

L'invention est définie telle que revendiquée dans la revendication 1 et les revendications qui en dépendent.

Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1 illustre, de façon très schématique, un exemple de système d'estimation de la capacité de production d'énergie solaire à l'échelle d'un territoire ;
les figures 2A et 2B sont des exemples arbitraires d'allures de rayonnement solaire reçu par un capteur de rayonnement ;
la figure 3 est un schéma bloc illustrant des étapes d'un mode de réalisation du procédé d'étalonnage d'un capteur de rayonnement ; et
les figures 4A et 4B illustrent le fonctionnement du mode de réalisation de la figure 3.

Description détaillée

De mêmes éléments ont été désignés par de mêmes références aux différentes figures. Par souci de clarté, seuls les étapes et éléments utiles à la compréhension des modes de réalisation décrits ont été détaillés. En particulier, l'exploitation des mesures du capteur de rayonnement pour estimer les capacités de production d'énergie d'une centrale n'a pas été détaillée, les modes de réalisation décrits étant compatibles avec l'exploitation usuelle de mesures fournies par un capteur de rayonnement solaire. De plus, la réalisation pratique d'un capteur de rayonnement et la conversion du signal de mesure n'ont pas non plus été détaillées, les modes de réalisation décrits étant, là encore, compatibles avec les capteurs de rayonnement usuels équipés de moyens de calcul.

Divers exemples de mise en œuvre et de réalisation sont exposés par la suite. Indépendamment de la dénomination donnée à ces exemples (modes de réalisation, exemple, variante, etc.) et les qualificatifs employés (par exemple, de préférence, etc.), seules les parties de description incl
ent dans la portée des revendications font partie de la présente invention, les autres exemples n'étant utiles que pour mettre en évidence des aspects spécifiques à l'invention par rapport à ce qui n'en fait pas partie.

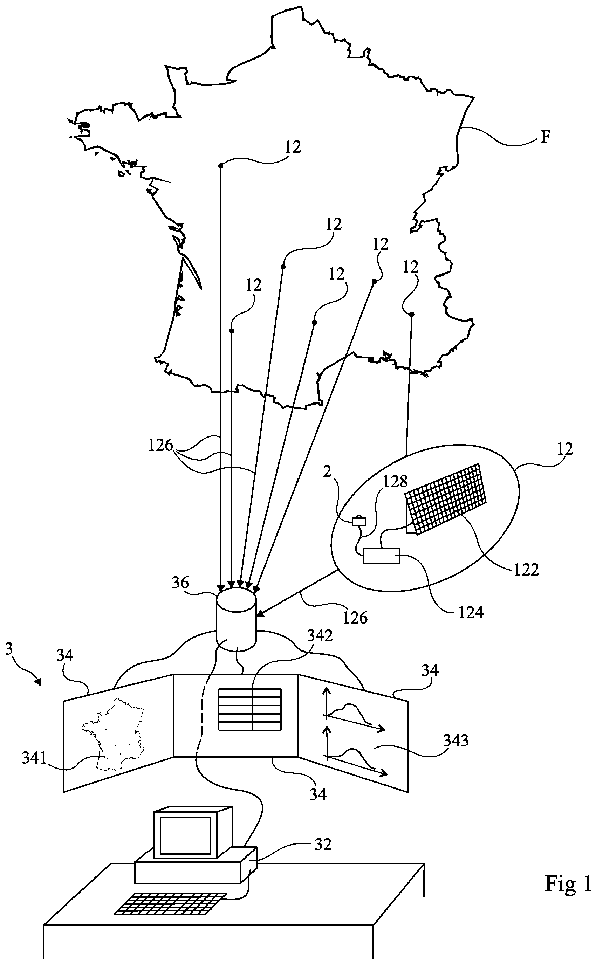

La figure 1 illustre un exemple d'installation d'exploitation d'énergie solaire de façon centralisée à des fins de gestion de la distribution d'énergie.

De multiples centrales solaires 12, chacune constituée d'un ou de plusieurs ensembles de panneaux photovoltaïques (panneaux solaires) 122, et d'un système 124 de gestion et de conversion d'énergie (incluant notamment un onduleur) sont réparties sur un territoire F. Le système 124 est généralement associé à un capteur de rayonnement 2 (par exemple de type pyranomètre). Ce capteur mesure le rayonnement dans l'atmosphère terrestre.

L'énergie fournie par chaque centrale 12 peut, par exemple, être injectée sur le réseau de distribution électrique du territoire F et, parallèlement, les diverses centrales 12 envoient des données (liaisons 126) à un système informatique 3 centralisant la gestion de l'énergie. Ce système 3 comprend généralement une salle de commande et d'exploitation du réseau, équipée d'un ou plusieurs ordinateurs 32, d'un ou plusieurs écrans 34 et d'une ou plusieurs bases de données 36 recevant les informations des différentes centrales.

Le système 3 permet à un ou plusieurs opérateurs de gérer la distribution d'énergie à partir des informations, connues a priori ou collectées des différentes centrales, qu'il(s) visualise(nt) sur les écrans. Ces informations incluent, entre autres, la localisation géographique des centrales (carte 341), des informations 342 sur la production et la demande et, par exemple, des informations sur le rayonnement 343 reçu par une ou plusieurs centrales, permettant une comparaison par rapport à une production attendue.

La représentation de la figure 1 est un exemple illustratif d'une application possible des modes de réalisation qui vont être décrits. Cette illustration est bien entendu simplifiée, les modes de réalisation décrits ne portant pas sur l'exploitation des mesures obtenues par les capteurs de rayonnement solaire pour prédire une capacité de production d'énergie ou gérer la distribution. L'exploitation des capacités de production fait appel à des techniques usuelles, le plus souvent indépendantes de la nature de la source d'énergie.

Une particularité de la production d'énergie solaire est cependant le besoin de prévoir, notamment à partir des conditions météorologiques, la capacité de production des centrales solaires par rapport aux autres sources d'énergie. Une autre particularité est la dissémination de centrales de faible capacité de production (moins de 10 kW) sur l'ensemble d'un territoire.

Ces particularités entraînent que la fiabilité des mesures de rayonnement effectuées au niveau des centrales elles-mêmes est particulièrement importante.

Par ailleurs, la dissémination et le grand nombre de centrales solaires rendent plus difficile le retour des pyranomètres ou autres capteurs en atelier pour réétalonnage.

On pourrait penser utiliser des dispositifs d'étalonnage portatifs et organiser des visites de contrôle des différentes centrales de façon périodique. Toutefois, cela accroît considérablement le coût de l'étalonnage et par conséquent le coût de production d'énergie. De plus, il n'est pas envisageable de visiter les centrales de petite capacité fréquemment, ce qui retarde d'autant la prise en compte des dérives éventuelles.

Dans le cadre du suivi d'un groupe de centrales de production d'énergie solaire, on peut être amené à faire de la prévision de production pour l'avenir proche. La plupart des systèmes s'appuient dans ce cas sur des mesures sur le terrain pour nourrir des procédures d'intelligence artificielle. Les mesures de rayonnement solaires sont bien entendu prises en compte. Par conséquent, la présence de mesures aberrantes dues au mauvais étalonnage des capteurs handicape considérablement les performances des prévisions. Il existe donc un réel besoin pour un système d'estimation et de correction de la dérive des capteurs, d'autant plus si le système fonctionne de façon homogène sur l'ensemble des centrales. Bien entendu, d'autres applications sont envisageables, comme par exemple, la surveillance du "ratio" de performances ("performance ratio") de centrales photovoltaïques, la prévision météo, etc.

L'étalonnage d'un capteur de rayonnement, initialement ou en fonctionnement, consiste à déterminer des coefficients d'une fonction affine appliquée aux valeurs mesurées. Cette fonction corrige les mesures et fournit une valeur de rayonnement. En notant $G_{MES}$ la mesure effectuée et $G_{COR}$ la mesure corrigée, à un instant t donné, la mesure corrigée est obtenue en appliquant une relation du type :

$$G_{COR}(t) = \alpha.(G_{MES}(t) - \beta), \qquad\qquad (1)$$

où $\alpha$ et $\beta$ sont des coefficients de la fonction affine déterminée pour l'étalonnage du capteur.

En pratique, la dérive du coefficient $\beta$ est négligeable et on ne se préoccupe ici que de la dérive au cours du temps du coefficient a.

On a déjà proposé, par exemple dans l'article "An évaluation method of PV systems" de T. Oozeki, T. Izawa, K. Otani et K. Kurokawa (Solar Energy Materials & Solar Cells 75 (2003) 687-695), une méthode d'évaluation des performances de plusieurs modules photovoltaïques interconnectés. Cette méthode évalue les puissances produites quotidiennement par la centrale au cours d'un mois. On cherche ensuite le coefficient minimum par lequel il faudrait multiplier le rayonnement dit temps clair c'est-à-dire en l'absence de nuage, pour englober les mesures effectuées par le capteur. Une telle adaptation ne s'effectue pas en temps réel et requiert des mesures sur plusieurs jours. Cela permet de définir une sorte de "puissance crête effective" de la centrale, mais cela n'implique pas d'estimation du rayonnement reçu.

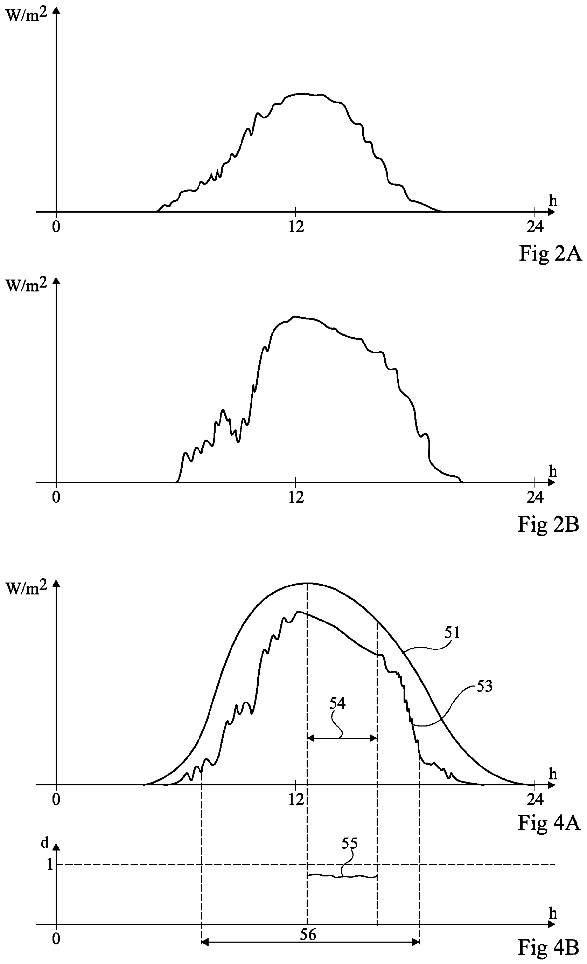

Les figures 2A et 2B illustrent deux exemples d'allures de rayonnement (Watt/m$^2$) obtenues au cours du temps (h) tout au long d'une journée par un capteur solaire. Ce sont ces mesures de rayonnement qui doivent être exploitables pour ensuite estimer les capacités de production d'énergie d'une centrale solaire. Au cours d'une journée normale, c'est-à-dire, sans variations de rayonnement autres que celles liées à la course du soleil, donc à l'heure de la journée, la courbe suit approximativement une courbe en cloche. En pratique, il y a toujours des perturbations (nuages, objets, salissures (déjections d'oiseaux), etc.) faisant écran temporairement entre le capteur et le ciel. La figure 2A illustre le cas où des perturbations mineures apparaissent. La figure 2B illustre le cas où, pendant quelques heures, le capteur est partiellement ombré mais suffisamment pour faire chuter le rayonnement reçu de façon importante.

Le procédé d'étalonnage proposé ci-après est basé sur une estimation de la dérive du capteur exploitant des périodes pendant lesquelles le capteur est dans une condition de ciel clair (absence de nuages).

On exploite alors un modèle de rayonnement fournissant une courbe théorique du rayonnement, en condition de ciel clair, pour la zone dans laquelle sont positionnés le capteur et la centrale solaire. Cette courbe théorique peut prendre en compte d'autres paramètres comme la date, l'inclinaison et l'orientation du capteur.

La valeur du coefficient de correction $\alpha$ (qui représente également une estimation de la dérive) à apporter aux mesures est adaptée, pour le jour courant, en fonction d'une exploitation des mesures d'un ou, de préférence, de plusieurs jours précédents.

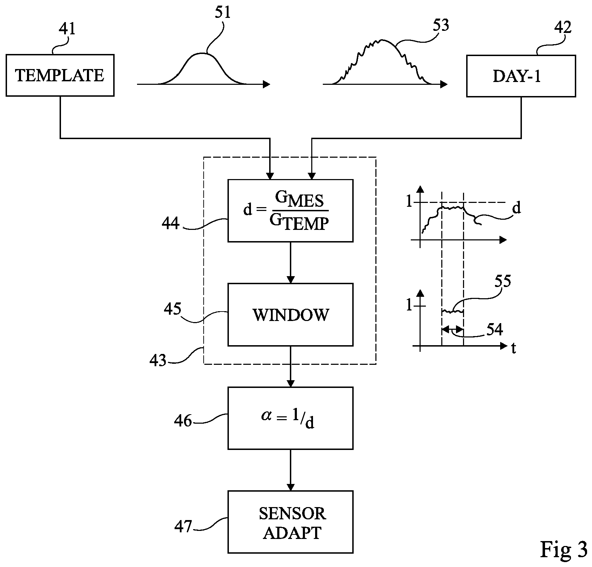

La figure 3 est un schéma bloc illustrant des étapes d'un mode de réalisation du procédé d'étalonnage d'un capteur de rayonnement solaire.

Les figures 4A et 4B sont des chronogrammes illustrant le fonctionnement de ce procédé.

Le procédé est mis en oeuvre par un circuit de traitement numérique de type microprocesseur, programmé pour mettre en oeuvre les différentes étapes qui vont être décrites. On utilise des circuits de traitement numérique et des mémoires équipant habituellement, soit le capteur de rayonnement 2 lui-même, soit un éventuel dispositif (124, figure 1) de gestion qui reçoit les informations du capteur de rayonnement 2, ou plus généralement tout dispositif informatique susceptible de communiquer avec le capteur.

Un modèle journalier 51 de rayonnement en temps clair de la zone dans laquelle est placé le capteur est stocké (bloc 41, TEMPLATE) dans le dispositif de traitement. Ce stockage est effectué, par exemple, lors de l'installation de la centrale solaire et du capteur. En variante, le modèle est calculé à la volée, ce qui permet de prendre en compte plus facilement les paramètres autres que la localisation (date, inclinaison, orientation, etc.).

Les modèles théoriques permettant d'estimer le rayonnement en temps clair sur une région donnée en fonction de la date, de l'heure, de la longitude, de la latitude, de l'orientation du panneau ou du capteur, de l'inclinaison, de l'albédo, etc. sont connus. On suppose que le modèle du bloc 41 tient compte de tout ou partie de ces paramètres et, de préférence, de tous.

De tels modèles sont par exemple décrits dans l'article "On the clear sky model of ESRA - European Solar Radiation Atlas - with respect to the Heliosat method" de C. Rigollier, O. Bauer et L. Wald, paru dans la revue Solar Energy Vol. 68, No. 1, pages 33-48, en 2000.

Ces modèles fournissent, en fonction de la date de l'année, une courbe en cloche 51 (figure 4A) indiquant le rayonnement en Watt/m$^2$ en fonction de l'heure (h) de la journée. La nuit, le rayonnement est quasi nul.

Pour estimer la dérive et déterminer le coefficient $\alpha$ à appliquer aux mesures afin, qu'en cas de temps clair, le rayonnement mesuré corresponde au rayonnement du modèle, on cherche à déterminer, au cours d'une journée de mesures réelles effectuées par le capteur, des périodes dans lesquelles celui-ci était dans une situation de temps clair.

Pour cela, le modèle étant établi sur un cycle journalier, on mémorise l'allure du rayonnement mesuré par le capteur au cours d'une journée (allure 53, figure 4A). En pratique, pour optimiser l'asservissement de l'étalonnage du capteur, on mémorise les mesures de la journée qui précède l'instant de l'étalonnage (bloc 42, DAY-1). On peut considérer qu'à minuit (24h), on dispose du cycle journalier complet de la journée écoulée. Le traitement qui va suivre s'applique aux données de cette journée écoulée.

On compare alors (bloc 43) l'allure réelle obtenue 53 par rapport au modèle temps clair 51. L'objectif de cette comparaison est de déterminer une ou plusieurs fenêtres ou plages temporelles 54 pendant la ou lesquelles l'allure réelle 53 peut être considérée comme correspondant à une exposition en temps clair.

En pratique, la comparaison s'effectue sur des valeurs numériques, dans la mesure où le capteur fournit généralement des valeurs discrètes au cours du temps (il fournit une valeur à chaque mesure). La comparaison s'effectue de préférence sur toutes les mesures prises par le capteur, ce qui améliore la fiabilité du résultat ou, en variante pour économiser des ressources de calcul ou consommer moins, sur seulement une mesure sur un nombre prédéfini de mesures (par exemple, une mesure sur deux, une mesure sur quatre, etc.). On pourra encore prévoir plusieurs mesures consécutives agrégées (par leur moyenne, leur médiane, etc.). Le choix du nombre de mesures pris en compte dépend, entre autres, de la fréquence de mesure du capteur. Si celui-ci prend un très grand nombre de mesures (par exemple, toutes les secondes ou plusieurs par secondes), on peut ne pas tenir compte de toutes les mesures sans perdre trop d'information. Si, par contre, la fréquence des mesures est plus faible (par exemple, toutes les minutes), il est préférable de tenir compte de toutes les mesures pour l'étalonnage.

Pour chaque mesure (échantillon), on cherche à déterminer si cela correspond ou non à un instant de temps clair (c'est-à-dire à un moment où le soleil n'est pas masqué). Pour cela, on peut, par exemple, estimer que les moments où la courbe des mesures rapportée à la courbe théorique par temps clair est relativement lisse (avec un seuil de variation sur l'écart-type des variations sur une fenêtre glissante) et que les valeurs mesurées sont assez hautes (et ce, sur un intervalle de temps suffisant autour du moment considéré).

Les inventeurs ont constaté que l'écart entre le rayonnement réel sur une période de temps clair par rapport à un modèle de ce rayonnement fournit directement une valeur au moins approximative du coefficient $\alpha$ de la correction à apporter au capteur pour son étalonnage.

En fait, en considérant des périodes de temps clair, c'est-à-dire pendant lesquelles le capteur devrait donner des valeurs correspondant à celles du modèle, la formule correctrice (1) ci-dessus devrait donner la valeur du modèle à partir de la valeur mesurée. En négligeant le coefficient $\beta$ qui est, en pratique, proche de 0 donc d'autant plus négligeable que le rayonnement est important (cas du temps clair), on voit que la correction à apporter revient au rapport de la valeur donnée par le modèle sur la valeur mesurée.

Ainsi, on évalue (bloc 44, d = $G_{MES}/G_{TEMP}$) le rapport de la valeur instantanée mesurée $G_{MES}$ sur la valeur instantanée $G_{TEMP}$ donnée par le modèle. Cette quantité positive d est d'autant plus faible que le ciel est couvert et est théoriquement égale à l'unité si le capteur est parfaitement étalonné et que le ciel est clair. La figure 4B illustre l'allure 55 obtenue sur la fenêtre temporelle 54. Cette allure donne une indication du défaut du coefficient $\alpha$ (en fait de son inverse).

En variante, on pourra évaluer le rapport inverse 1/d, c'est-à-dire le rapport $G_{TEMP}/G_{MES}$ qui donne directement la valeur du coefficient a. Quel que soit le rapport utilisé, ce rapport représente une estimation de la dérive du capteur.

Afin d'éviter la prise en compte des périodes non significatives (par exemple la nuit où le rayonnement est en principe proche de 0) ou de fortes variations (aube et crépuscule), la détermination de la fenêtre temporelle de temps clair (bloc 45, WINDOW) s'effectue à l'intérieur d'une période 56 dite de jour. Cette période de jour est choisie, à titre d'exemple et de façon arbitraire, comme correspondant à une période dans laquelle le rayonnement selon le modèle temps clair est supérieur à une valeur donnée, typiquement 50 Watt/m$^2$. On considère en effet généralement que les périodes dans lesquelles le rayonnement est compris entre 0 et 50 Watt/m$^2$ correspondent à l'aube et au crépuscule. Ce seuil absolu de 50 Watt/m$^2$ est bien entendu adapté suivant les lieux. A titre de variante, la sélection de la période de jour peut s'effectuer à partir d'un calendrier et de l'indication de l'heure.

Dans le cas où plusieurs fenêtres temporelles sont prises en considération, on effectue, par exemple, la moyenne des valeurs obtenues sur les différentes périodes.

La calibration s'effectue de préférence pendant la seconde partie de la nuit, c'est-à-dire entre minuit et l'aube du jour suivant. La simplicité de la détermination permet d'effectuer une calibration quotidienne. Si aucune fenêtre temporelle acceptable n'est disponible sur une journée donnée, l'étalonnage est reporté au jour suivant.

La fiabilité de la correction de l'étalonnage du capteur dépend, entre autres, de la détermination des moments de temps clair. Plus la détection des moments de temps clair est efficace (c'est-à-dire, plus les faux positifs et les faux négatifs seront écartés), meilleure sera la détermination du coefficient a.

Pour détecter les périodes de temps clair, il est possible de rechercher les fenêtres temporelles pour lesquelles le rapport d (entre les mesures et le modèle théorique) montre des variations relativement faibles et un niveau suffisant. Par exemple, si le rapport d, sur la fenêtre temporelle autour d'un instant donné (par exemple, 1 heure avant et 1 heure après l'instant choisi), présente un écart-type inférieur à une valeur seuil et appartient à un intervalle jugé raisonnable, l'instant choisi pourra être considéré comme un instant où le ciel est clair. La plage de plus ou moins une heure est un exemple qui pourra être modifié.

Les inventeurs ont constaté que le choix de la largeur de la fenêtre temporelle peut être modifié en tenant compte (entre autres) de l'échantillonnage des données considérées. Plus l'intervalle de temps entre deux mesures est court, plus la taille de la fenêtre peut être réduite. Si aucune fenêtre temporelle acceptable n'est disponible sur une journée donnée, l'étalonnage est reporté au jour suivant.

Les calculs sur des fenêtres temporelles permettant la détection des instants de temps clair s'effectuent de façon itérative sur chacun des échantillons. Une telle détermination itérative est particulièrement adaptée à des systèmes de traitement numérique pilotés par logiciel.

Selon un mode de réalisation simplifié, on considère que l'estimation du coefficient $\alpha$ pour la journée considérée, qui représente la valeur de correction à appliquer à la fonction affine du capteur, correspond à l'inverse de la valeur médiane des coefficients d présents dans la ou les fenêtres temporelles (bloc 46, $\alpha = 1/d$). L'adaptation du capteur (bloc 47, SENSOR ADAPT) est effectuée à partir du coefficient $\alpha$ obtenu.

En pratique, l'estimation du coefficient $\alpha$ varie d'un jour à l'autre, que ce soit en raison d'une dérive dans le fonctionnement du capteur cette dérive étant progressive, à cause d'une faible quantité d'instants de temps clair dans la journée, ou suite à des imprécisions dans la détection des périodes de temps clair (par exemple des périodes de temps gris nuageux mais stables tout au long d'une journée).

Ainsi, on effectue de préférence une pondération de plusieurs déterminations du coefficient $\alpha$ en fonction d'un ou plusieurs facteurs.

De préférence, l'importance donnée aux différents facteurs est elle-même pondérée. A titre d'exemple, les inventeurs considèrent que l'ancienneté de la journée est le facteur le plus important, la fiabilité de la journée venant en deuxième et le niveau absolu de la journée étant le moins important.

D'autres pondérations pourront être envisagées pour rendre la détermination encore plus fiable. Par exemple, on pourra tenir compte de l'écart de la journée courante par rapport à la moyenne des journées précédentes.

En prenant l'exemple de l'ancienneté de la journée, de la fiabilité de la journée et du niveau absolu de la journée, on pourra, par exemple, utiliser les facteurs suivants.

Un facteur tient compte d'une moyenne pondérée des coefficients des jours précédents en affectant un poids d'autant plus faible au coefficient d'une journée donnée que cette journée est ancienne par rapport au jour courant.

Un autre facteur tient compte de la fiabilité estimée de la journée considérée. Cette fiabilité correspond au nombre de rapports d pris en considération sur la journée considérée, ce qui revient à classer les jours, ou les coefficients a, en fonction du nombre de périodes de temps clair sur lesquelles s'appuie la valeur. Plus ce nombre est important, plus le poids donné au coefficient $\alpha$ considéré est important.

Encore un autre facteur est le niveau de rayonnement obtenu. Cela revient à mettre l'accent sur les journées dans lesquelles les valeurs calculées pour le rapport d sont les plus élevées.

La détermination du poids à affecter aux coefficients $\alpha$ des différents jours en tenant compte des variantes ci-dessus, revient à faire le produit des facteurs pour chaque jour. Les poids sont obtenus en normalisant les résultats afin que la somme des poids soit égale à 1. En pratique, on peut choisir de ne considérer qu'un certain nombre des jours correspondant aux plus récents.

En pratique, les étapes ci-dessus sont effectuées en traitant de façon successive les échantillons de la journée considérée. Ce traitement peut être exprimé de la façon suivante.

On note i, l'instant où le rang de l'échantillon dans la journée, et j le jour (j=0 pour le jour courant, c'est-à-dire le jour au début duquel l'évaluation à partir des mesures réalisées est calculée, j=1 pour le jour sur lequel les mesures sont faites, c'est-à-dire la veille du jour courant, j=2 pour le jour précédent, etc.).

On désigne par x, une plage horaire (en nombre d'échantillons) autour de l'échantillon courant définissant un intervalle (plage temporelle) pendant lequel la mesure doit être à peu près stable pour que l'on considère une absence de perturbation (nuageuse ou autre). On fixe un seuil y du rapport d(i) en deça duquel doit rester l'écart-type du rapport calculé sur la plage horaire pour que l'on considère que le rayonnement est resté "stable".

On fixe un seuil z de détermination de mesures trop sombres ou aberrantes. Par exemple, si d(i) est inférieur à 1-z, on considère que le ciel est "sombre" à l'instant i, si d(i) est supérieur à 1+z, on considère que le ciel est "anormalement clair" à l'instant i (mesure aberrante). Suite à une longue période de dérive, un capteur peut renvoyer des valeurs hors de l'intervalle [1-z, 1+z]. Il est cependant possible de se prémunir d'une élimination inappropriée de ces valeurs en normalisant les valeurs $G_{MES}$ à partir de l'estimation du coefficient $\alpha$ de la veille. Dans ce cas, une fois la vérification faite, l'opération inverse sera réalisée pour ne pas perturber la suite du calcul.

Un rapport d(i) est pris en compte pour le calcul de la médiane (prise en compte dans l'allure 55) si :

- la plage horaire i-x à i+x est comprise dans le "jour", c'est-à-dire soit la mesure $G_{MES}$ est supérieure à un seuil (par exemple 50 watt/m$^2$) dans toute cette plage, soit la plage exclut la nuit, l'aube et le crépuscule, ou les deux ;
- l'écart type des rapports d(i) sur la plage i-x à i+x est inférieur au seuil y (par exemple, le seuil d'écart type est choisi entre 0,03 et 0,1, typiquement de l'ordre de 0,06) ; et
- la valeur du rapport d(i) est comprise entre 1-z et 1+z (par exemple, le seuil z est compris entre 0,2 et 0,6, de préférence de l'ordre de 0,4).

Le coefficient $\alpha_0$ est obtenu d'après la relation suivante :

$$\alpha_0 = \frac{\sum_{j=1}^{N} \left( p_j \cdot \alpha_j \right)}{\sum_{j=1}^{N} p_j} \,, \tag{2}$$

où N représente le nombre de jours passés pris en compte (de préférence entre 10 et 30) et pj représente le poids donné au jour de rang j. Il s'agit donc d'une moyenne pondérée des coefficients $\alpha_j$.

Dans un mode de réalisation simplifié, on ne tient compte que de l'ancienneté de la journée. Par exemple, on affecte des poids $p_j$ correspondant au rang de la journée ($p_j = j$).

Dans un mode de réalisation préféré où l'on prend en compte les trois facteurs mentionnés plus haut, le poids $p_j$ est obtenu, en combinant les poids $p_j^t$, $p_j^d$ et $p_j^e$ respectivement donnés à l'ancienneté du coefficient $\alpha_j$, au nombre de données sur lesquelles s'appuie le coefficient $\alpha_j$ et à la valeur du coefficient $\alpha_j$ d'après la relation suivante :

$$p_j = \frac{p_j^t \cdot p_j^d \cdot p_j^e}{\sum_{j=1}^{N} \left( p_j^t \cdot p_j^d \cdot p_j^e \right)} \,, \quad \text{avec :} \tag{3}$$

$$p_j^t = \exp\left( -10 \cdot \frac{n_j^t}{N} \right) \; ; \tag{4}$$

$$p_j^d = \exp\left( -7 \cdot \frac{n_j^d}{N} \right) \; ; \quad \text{et} \tag{5}$$

$$p_j^e = \exp\left(-4 \cdot \frac{n_j^e}{N}\right), \qquad (6)$$

où :

$n_j^t$ désigne le numéro de l'estimation $\alpha_j$ rangée de la plus récente à la plus ancienne (par exemple 1 pour $\alpha_1$, 2 pour $\alpha_2$, jusqu'à N pour $\alpha_N$) ;

$n_j^d$ désigne le numéro de l'estimation $\alpha_j$ rangée suivant le nombre de d(i) pris en compte pour son calcul (1 pour la valeur de $\alpha_j$ basée sur le plus grand nombre d'instants i considérés comme "temps clair" le jour j, N pour la valeur de $\alpha_j$ basée sur le moins grand nombre d'instants) ; et

$n_j^e$ désigne le numéro de l'estimation $\alpha_j$ rangée suivant le niveau de la valeur $\alpha_j$ (1 pour la plus grande, N pour la plus faible).

Les nombres 10, 7 et 4 des formules (4) à (6) sont des exemples de facteurs d'importance donnée aux poids $p_j^t$, $p_j^d$ et $p_j^e$. Plus le nombre en facteur de l'exponentielle est élevé, plus le poids est important dans la moyenne de la formule (3).

La somme des poids $p_j$ est normalisée à 1 (la moyenne étant faite par la formule (3)). Par conséquent, la formule (2) devient :

$$\alpha_0 = \sum_{j=1}^{N} \left(p_j \cdot \alpha_j\right). \qquad (2')$$

Un avantage des modes de réalisation qui ont été décrits est qu'il est désormais particulièrement simple d'étalonner un capteur en temps réel en fonction des dérives qu'il subit. Cela fiabilise considérablement les mesures de rayonnement solaire.

Un autre avantage des modes de réalisation décrits est que leur mise en oeuvre ne nécessite aucune modification structurelle des capteurs de rayonnement solaire existants, l'estimation de la dérive, puis l'étalonnage s'effectuent à partir d'une interprétation des valeurs mesurées et mémorisées. On notera que l'estimation de la dérive du capteur, ou la détermination de la valeur corrective a, peut même s'effectuer à distance du capteur, dans le dispositif 124 de gestion du panneau solaire, voire sur un serveur distant.

Divers modes de réalisation ont été décrits. Diverses variantes et modifications apparaîtront à l'homme de l'art. En particulier, tout ce qui a été exposé en relation avec une mesure directe du rayonnement peut s'effectuer à partir de grandeurs représentatives de ce rayonnement. Par exemple, il pourra s'agir du courant circulant dans l'élément de mesure du capteur ou de toute autre grandeur représentative du rayonnement instantané. De plus, la mise en oeuvre pratique des modes de réalisation décrits est à la portée de l'homme du métier à partir des indications fonctionnelles données ci-dessus en utilisant des outils informatiques et de programmation.

## Revendications

1. Procédé d'estimation de la dérive d'un capteur de rayonnement solaire (2), dans lequel ledit capteur est un pyranomètre ou une cellule de référence associée à des panneaux photovoltaïques, et dans lequel :

on prend en compte le rayonnement mesuré (GMES) par ce capteur dans ses conditions d'utilisation et un modèle (51) de rayonnement en exploitant des rapports instantanés (d, a) entre des valeurs de rayonnement mesurées (GMES) et des valeurs (GTEMP) données par le modèle (51), ou entre des valeurs (GTEMP) données par le modèle (51) et des valeurs de rayonnement mesurées (GMES) ;
le modèle (51) fournit une estimation du rayonnement attendu en cas de temps clair et tient compte de la localisation géographique du capteur, celui-ci étant situé dans l'atmosphère terrestre ;
le rayonnement mesuré (GMES) est comparé (43) au rayonnement attendu (GTEMP), fourni par le modèle (51), pendant des périodes correspondant à un temps clair ; et
une estimation de la dérive du capteur est calculée en tenant compte d'estimations antérieures de la dérive.

2. Procédé selon la revendication 1, dans lequel l'estimation de la dérive du capteur est calculée quotidiennement.

3. Procédé selon la revendication 1 ou 2, dans lequel un rapport instantané (d) est pris en compte si l'instant est compris dans une plage temporelle (54) au cours de laquelle la variation des rapports est inférieure à un seuil.

4. Procédé selon l'une quelconque des revendications 1 à 3, dans lequel un rapport (d) est pris en compte si sa valeur est comprise entre deux seuils.

5. Procédé selon l'une quelconque des revendications 1 à 4, dans lequel un rapport (d) est pris en compte s'il correspond à une période de jour.

6. Procédé selon l'une quelconque des revendications 1 à 5, dans lequel l'estimation de la dérive est obtenue à partir d'une moyenne pondérée d'estimations calculées au cours des jours précédents.

7. Procédé selon la revendication 6, dans lequel la pondération tient compte de l'ancienneté des jours pris en compte.

8. Procédé selon la revendication 6 ou 7, dans lequel la pondération tient compte d'un coefficient de fiabilité affecté à l'estimation du jour considéré.

9. Procédé selon l'une quelconque des revendications 6 à 8, dans lequel la pondération prend en compte la valeur de l'estimation.

10. Procédé d'étalonnage d'un capteur de rayonnement solaire, dans lequel un coefficient de correction (a) à appliquer aux mesures est obtenu à partir d'une estimation de la dérive du capteur conformément à l'une quelconque des revendications 1 à 9.


**Patentansprüche**

1. Ein Verfahren zum Schätzen der Verschiebung bzw. Drift eines Sonneneinstrahlungssensors (2), wobei der Sensor ein Pyranometer oder eine Referenzzelle ist, die mit photovoltaischen Platten verbunden ist, und wobei:

die Einstrahlung, die von diesem Sensor unter seinen Einsatzbedingungen gemessen wird (GMES), und ein Einstrahlungsmodell (51) berücksichtigt werden, wobei momentane Verhältnisse (d, a) von gemessenen Einstrahlungswerten (GMES) zu Werten (GTEMP), die durch das Modell (51) gegeben sind, oder von Werten (GTEMP), die durch das Modell (51) gegeben sind, zu gemessenen Einstrahlungswerten (GMES) verwendet werden;
das Modell (51) eine Schätzung der Einstrahlung liefert, die bei einem klaren Himmel zu erwarten ist, und den geografischen Standort des Sensors berücksichtigt, wobei sich dieser in der Erdatmosphäre befindet;
die gemessene Einstrahlung (GMES) mit der erwarteten Einstrahlung (GTEMP) verglichen wird (43), die von dem Modell (51) während der Perioden, die einem klaren Himmel entsprechen, geliefert wird; und
die Schätzung der Sensorverschiebung unter Berücksichtigung früherer Schätzungen der Verschiebung berechnet wird.

2. Das Verfahren nach Anspruch 1, wobei die Schätzung der Sensorverschiebung täglich berechnet wird.

3. Das Verfahren nach Anspruch 1 oder 2, wobei ein momentanes Verhältnis (d) berücksichtigt wird, wenn die Zeit innerhalb eines Zeitbereichs (54) liegt, in dem die Verhältnisänderung kleiner als ein Schwellenwert ist.

4. Das Verfahren nach einem der Ansprüche 1 bis 3, bei dem ein Verhältnis (d) berücksichtigt wird, wenn sein Wert zwischen zwei Schwellenwerten liegt.

5. Das Verfahren nach einem der Ansprüche 1 bis 4, wobei ein Verhältnis (d) berücksichtigt wird, wenn es einer Tagzeitperiode entspricht.

**6.** Das Verfahren nach einem der Ansprüche 1 bis 5, wobei die Schätzung der Verschiebung aus einem gewichteten Durchschnitt von Schätzungen gewonnen wird, die während der vorangegangenen Tage berechnet wurden.

**7.** Das Verfahren nach Anspruch 6, wobei die Gewichtung den Abstand in der Vergangenheit der berücksichtigten Tage berücksichtigt.

**8.** Das Verfahren nach Anspruch 6 oder 7, wobei die Gewichtung einen Zuverlässigkeitskoeffizienten berücksichtigt, der der Schätzung des betrachteten Tages zugeordnet ist.

**9.** Das Verfahren nach einem der Ansprüche 6 bis 8, wobei bei der Gewichtung der Wert der Schätzung berücksichtigt wird.

**10.** Ein Verfahren zur Kalibrierung eines Sonneneinstrahlungssensors, wobei ein Korrekturkoeffizient (a), der auf die Messungen anzuwenden ist, aus einer Schätzung der Sensorverschiebung nach einem der Ansprüche 1 bis 9 erhalten wird.

**Claims**

**1.** Method of estimating the drift of a solar radiation sensor (2), wherein said sensor is a pyranometer or a reference cell associated with photovoltaic panels, and wherein:
the radiation measured (GMES) by this sensor in its conditions of use and a radiation model (51) are taken into account, using instantaneous ratios (d, $\alpha$) of measured radiation values (GMES) to values (GTEMP) given by the model (51), or of values (GTEMP) given by the model (51) to measured radiation values (GMES);

the model (51) delivers an estimate of the radiation expected in the case of a clear sky and takes into account the geographic location of the sensor, the latter being located in the terrestrial atmosphere;
the measured radiation (GMES) is compared (43) with the expected radiation (GTEMP), delivered by the model (51), during periods corresponding to a clear sky; and
the estimate of the sensor drift is calculated by taking into account prior estimates of the drift.

**2.** Method according to claim 1, wherein the estimate of the sensor drift is calculated daily.

**3.** Method according to claim 1 or 2, wherein an instantaneous ratio (d) is taken into account if the time is comprised within a time range (54) during which the ratio variation is smaller than a threshold.

**4.** Method according to any of claims 1 to 3, wherein a ratio (d) is taken into account if its value is comprised between two thresholds.

**5.** Method according to any of claims 1 to 4, wherein a ratio (d) is taken into account if it corresponds to a daytime period.

**6.** Method according to any of claims 1 to 5, wherein the estimate of the drift is obtained from a weighted average of estimates calculated during the previous days.

**7.** Method according to claim 6, wherein the weighting takes into account the distance in the past of the days taken into account.

**8.** Method according to claim 6 or 7, wherein the weighting takes into account a reliability coefficient assigned to the estimate of the considered day.

**9.** Method according to any of claims 6 to 8, wherein the weighting takes into account the value of the estimate.

**10.** Method of calibrating a solar radiation sensor, wherein a correction coefficient ($\alpha$) to be applied to the measurements is obtained from an estimate of the sensor drift according to any of claims 1 to 9.

Fig 1

Fig 2A

Fig 2B

Fig 4A

Fig 4B

Fig 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7166825 B
- US 7576346 B
- US 20090012731 A
- EP 2211300 A

**Littérature non-brevet citée dans la description**

- **DE A. DREWS et al.** Monitoring and remote failure détection of grid-connected PV systems based on satellite observations. *Science Direct, Solar Energy,* 2007, vol. 81, 548-564
- **DE T. OOZEKI ; T. IZAWA ; K. OTANI ; K. KUROKAWA.** An évaluation method of PV systems. *Solar Energy Materials & Solar Cells,* 2003, vol. 75, 687-695
- **C. RIGOLLIER ; O. BAUER ; L. WALD.** On the clear sky model of ESRA - European Solar Radiation Atlas - with respect to the Heliosat method. *Solar Energy,* 2000, vol. 68 (1), 33-48